# EUROPÄISCHE PATENTANMELDUNG

(11) **EP 1 077 174 A2**
(43) Veröffentlichungstag der Anmeldung: **21.02.2001**
(21) Anmeldenummer: 00116329.4
(22) Anmeldetag: 27.07.2000
(51) Int. Cl.: B62H 5/18

(54) **Klobenschloss**

(30) Priorität: 16.08.1999 DE 19938740
(71) Anmelder: ABUS August Bremicker Söhne KG, 58300 Wetter-Volmarstein (DE)
(72) Erfinder:
(74) Vertreter: Manitz, Finsterwald & Partner

(57) **Zusammenfassung**

Die Erfindung betrifft ein Klobenschloß, insbesondere ein Bremsscheibenschloß für Motorräder, mit einem Schloßkörper (11) und einem hieran verriegelbaren Kloben (13), wobei der Kloben einen Sperranker (21), einen Verriegelungsfortsatz (25) sowie einen dazwischen angeordneten Klobenhals (23) aufweist, und wobei der Schloßkörper (11) einen Aufnahmebereich (53) zur Aufnahme des Verriegelungsfortsatzes (25) des Klobens (13), einen Schließzylinder und einen durch eine Drehbetätigung des Schließzylinders bewegbaren Riegel (37) zum Verriegeln oder Entriegeln des in den Aufnahmebereich (53) eingeführten Verriegelungsfortsatzes (25) aufweist. Der Schloßkörper (11) weist ferner wenigstens ein Umwandlungselement (67,69,75,81) auf, durch das eine Drehbetätigung des Schließzylinders in eine axiale Verriegelungs- oder Entriegelungsbewegung des Riegels (37) umgewandelt werden kann.

## Beschreibung

Die Erfindung betrifft ein Klobenschloß, insbesondere ein Bremsscheibenschloß für Motorräder, mit einem Schloßkörper und einem hieran verriegelbaren Kloben, wobei der Kloben einen Sperranker, einen Verriegelungsfortsatz sowie einen dazwischen angeordneten Klobenhals aufweist, und wobei der Schloßkörper einen Aufnahmebereich zur Aufnahme des Verriegelungsfortsatzes des Klobens, einen Schließzylinder und einen durch eine Drehbetätigung des Schließzylinders bewegbaren Riegel zum Verriegeln oder Entriegeln des in den Aufnahmebereich eingeführten Verriegelungsfortsatzes aufweist.

Um mit Hilfe eines derartigen Klobenschlosses einen Gegenstand abzusperren, wird der Kloben mit seinem Verriegelungsfortsatz voraus durch eine Durchlaßöffnung des Gegenstandes, beispielsweise durch eine Lüftungsöffnung einer Motorradbremsscheibe, geführt, so daß der Sperranker an einem Ende der Durchlaßöffnung anliegt und die Durchlaßöffnung den Klobenhals umgreift. Danach wird der Schloßkörper derart auf den aus dem anderen Ende der Durchlaßöffnung herausstehenden Verriegelungsfortsatz aufgesetzt, daß dieser in den Aufnahmebereich des Schloßkörpers hineinragt. Anschließend wird durch eine Drehbetätigung des Schließzylinders der Riegel über den Verriegelungsfortsatz geführt. Aufgrund des Anliegens des Sperrankers und des verriegelten Schloßkörpers jeweils an einem Ende der Durchlaßöffnung ist das Klobenschloß gegen eine Entnahme aus der Durchlaßöffnung gesichert.

Für die Verriegelung des Verriegelungsfortsatzes innerhalb des Schloßkörpers ist es bekannt, als Riegel eine durch den Schließzylinder drehbetätigbare Verriegelungshülse mit einer Umfangsnut vorzusehen. Im entriegelten Zustand des Klobenschlosses kann der Verriegelungsfortsatz des Klobens durch einen entsprechend breiten Abschnitt der Umfangsnut hindurch in den Aufnahmebereich des Schloßkörpers eingeführt oder aus diesem herausgeführt werden. Zur Verriegelung des Klobenschlosses wird die Verriegelungshülse gedreht, wobei ein schmälerer Abschnitt der Umfangsnut an dem Klobenhals entlang über den Verriegelungsfortsatz des Klobens gedreht wird, so daß der Verriegelungsfortsatz gegen eine Entnahme aus dem Schloßkörper gesperrt ist.

Nachteilig an dem bekannten Klobenschloß ist, daß die Unterbringung der um den Aufnahmebereich rotierenden Verriegelungshülse in der Umgebung des Aufnahmebereichs zusätzlichen Raum beansprucht. Dadurch vergrößert sich die Bauform des Klobenschlosses in der Umgebung des Aufnahmebereichs in unerwünschter Weise.

Es ist eine Aufgabe der Erfindung, ein Klobenschloß zu schaffen, dessen Verriegelungsmechanismus insbesondere in der Umgebung des für den Verriegelungsfortsatz des Klobens vorgesehenen Aufnahmebereichs ein möglichst geringes Volumen beansprucht.

Diese Aufgabe wird für ein Klobenschloß der eingangs genannten Art dadurch gelöst, daß der Schloßkörper ferner wenigstens ein Umwandlungselement aufweist, durch das eine Drehbetätigung des Schließzylinders in eine axiale Verriegelungs- oder Entriegelungsbewegung des Riegels umwandelbar ist.

Bei dem erfindungsgemäßen Klobenschloß sorgt also ein Umwandlungselement dafür, daß eine Drehbewegung des Schließzylinders letztlich eine axiale Bewegung des Riegels bewirkt. Daher wird bei einer Entriegelungsbewegung der Riegel dem Aufnahmebereich in einer seitlichen Richtung geradlinig und somit auf einem möglichst direkten Weg entnommen, so daß in der gesamten weiteren Umgebung des Aufnahmebereichs kein Freiraum für eine Verriegelungs- oder Entriegelungsbewegung des Riegels oder für eine entsprechende Verriegelungsmechanik freigehalten werden muß. Insbesondere kann auf einen den Aufnahmebereich umgebenden zylindrischen Freiraum, wie für die Verriegelungshülse gemäß dem Stand der Technik erforderlich, verzichtet werden. Somit führt die durch das Umwandlungselement bewirkte Axialbewegung des Riegels zu einer erheblichen Reduzierung des Platzbedarfs der Verriegelungsmechanik in der Umgebung des Aufnahmebereichs des Schloßkörpers.

Da aufgrund der Wirkung des Umfwandlungselements der Riegel lediglich eine axiale Bewegung vollziehen muß, kann er zumindest in der Umgebung des Aufnahmebereichs des Schloßkörpers flach oder lediglich leicht gewölbt ausgebildet sein, wodurch eine weitere vorteilhafte Reduzierung der Schloßkörpertiefe erzielt wird.

Ferner ermöglicht die Erfindung eine neue Formgebung des Verriegelungsfortsatzes des Klobens. Bislang war der Verriegelungsfortsatz kugelförmig, also mit einem der Rotationsbewegung der Verriegelungshülse entsprechenden runden Querschnitt ausgestaltet. Da bei der Erfindung lediglich eine axiale Verriegelungs- bzw. Entriegelungsbewegung des Riegels vorgesehen ist, genügt es, wenn der Verriegelungsfortsatz sich scheibenförmig flach mit einem runden oder eckigen Umriß innerhalb einer Ebene erstreckt, die senkrecht zu der Richtung des Einführens des Verriegelungsfortsatzes in den Schloßkörper bzw. zu der Längsrichtung des Klobenhalses verläuft. Eine derartige scheibenförmige Ausgestaltung des Verriegelungsfortsatzes führt zu einer weiteren Reduzierung der Schloßkörpertiefe bzw. des für den Aufnahmebereich benötigten Volumens.

Das genannte Umwandlungselement kann als ein separates Bauteil oder an einem separaten Bauteil vorgesehen sein, das sowohl mit dem Schließzylinder als auch mit dem Riegel in Verbindung steht. Alternativ oder zusätzlich kann ein Umwandlungselement in den Riegel und/oder den Schließzylinder integriert sein.

In einer bevorzugten Ausführungsform der Erfindung ist ein innerhalb des Schloßkörpers vorgesehenes Umwandlungselement als eine Schrägführung ausgebildet, die mit einem weiteren Umwandlungselement, insbesondere einem Nocken oder einer weiteren Schrägführung, zusammenwirkt. Diese Schrägführung bzw. die weitere Schrägführung kann beispielsweise als eine gekrümmte Kante eines Teils des Schloßkörpers, als eine Stirnseite eines gekrümmt verlaufenden Abschnitts eines Schloßkörperteils oder als eine innerhalb des Schloßkörpers gekrümmt verlaufende Nut gebildet sein, die jeweils an dem Nocken bzw. der weiteren Schrägführung anliegt oder mit dem Nocken bzw. der weiteren Schrägführung in Eingriff steht.

Außerdem ist es möglich, daß zwei Paare jeweils aus Schrägführung und hiermit zusammenwirkendem Nocken bzw. hiermit zusammenwirkender weiteren Schrägführung vorgesehen sind, wobei bei entsprechender Drehbetätigung des Schließzylinders ein Paar die Verriegelungsbewegung des Riegels veranlaßt und das andere Paar die Entriegelungsbewegung. Alternativ hierzu kann auch ein einziges Paar zusammenwirkender Umwandlungselemente vorgesehen sein, beispielsweise für die Entriegelungsbewegung des Riegels. In diesem Fall kann die jeweils entgegengesetzte Axialbewegung des Riegels durch eine Rückstellfeder bewirkt werden.

Es ist weiterhin bevorzugt, wenn in dem Schloßkörper ein Mitnehmerelement vorgesehen ist, das mit dem Schließzylinder drehwirksam verbunden ist und ein oder mehrere Umwandlungselemente aufweist. Dadurch müssen an dem Schließzylinder selbst keine besonderen Umwandlungselemente vorgesehen sein, was in vorteilhafter Weise den Einsatz handelsüblicher Schließzylinder ermöglicht. Ein derartiges Mitnehmerelement ist allerdings nicht unbedingt erforderlich; beispielsweise kann auch der Nokken des Schließzylinders mit einem an dem Riegel vorgesehenen Umwandlungselement, beispielsweise einer Schrägführung, zusammenwirken.

In einer besonders vorteilhaften Ausführungform der Erfindung ist in der Umgebung des Aufnahmebereichs wenigstens ein Halteelement zum Halten des in den Aufnahmebereich eingeführten Verriegelungsfortsatzes des Klobens vorgesehen. Ein derartiges Halteelement verhindert beim Entriegeln des in den Aufnahmebereich eingeführten Verriegelungsfortsatzes, daß der Kloben unbeabsichtigt den Aufnahmebereich verläßt und aus dem Schloßkörper herausfällt.

Ein solches unkontrolliertes Loslösen des Klobens vom Schloßkörper kann zu einer Beschädigung des abgeschlossenen Gegenstandes führen, beispielsweise zu einer Beschädigung einer eine Bremsscheibe umgebenden Motorradfelge. Oft kann ein derartiges unkontrolliertes Loslösen des Klobens jedoch nicht leicht vermieden werden, da beim Aufsperren des Klobenschlosses mit einer Hand der Schließzylinder drehbetätigt und mit der anderen Hand der Schloßkörper gegengehalten wird. Dieses Problem wird durch das Halteelement beseitigt, das den bereits entriegelten Kloben erst freigibt, wenn der Benutzer den entriegelten Kloben bewußt aus dem Schloßkörper herauszieht oder den Schloßkörper vom Kloben abzieht.

Ein solches Halteelement kann bei dem Klobenschloß gemäß dem Stand der Technik nicht ohne weiteres vorgesehen werden, da - wie erläutert - die als Riegel dienende Verriegelungshülse den Aufnahmebereich des Schloßkörpers entlang dessen gesamten Umfangs umgibt und somit keinen Raum läßt für ein zusätzliches Halteelement.

Das Halteelement weist vorzugsweise wenigstens ein Rastelement auf, an dem der Verriegelungsfortsatz beim Einführen in den Aufnahmebereich verrastet werden kann. Beispielsweise kann dieses Rastelement durch eine geschlossene, ringartige Haltekante gebildet sein oder durch ein oder mehrere Paare jeweils einander gegenüberstehender Rastarme, die den Verriegelungsfortsatz rückfedernd hintergreifen. Um die erläuterte Haltefunktion auch bei vertikal herabhängendem Kloben erfüllen zu können, ist die von dem Halteelement ausgeübte Haltekraft vorzugsweise größer ist als das Gewicht des Klobens.

Weitere bevorzugte Ausführungsformen sind in den Unteransprüchen genannt. Nachfolgend wird die Erfindung beispielhaft unter Bezugnahme auf die Zeichnungen beschrieben. In diesen zeigen:
- Fig. 1: eine Perspektivansicht eines erfindungsgemäßen Klobenschlosses mit einem Schloßkörper und einem hiervon gelösten Kloben,
- Fig. 2a und 2b: eine Explosionsdarstellung des Klobenschlosses mit einem Innengehäuse, einem Zylindergehäuse und einer dazwischen angeordneten Mitnehmerscheibe, wobei die Mitnehmerscheibe einen Entriegelungszustand bzw. Verriegelungszustand einnimmt,
- Fig. 2c: eine Detailansicht des Innengehäuses, des Zylindergehäuses und der Mitnehmerscheibe gemäß Fig. 2a,
- Fig. 3a und 3b: Explosionsdarstellungen des Klobenschlosses, wobei die Mitnehmerscheibe und ein hieran angeordneter Schieberiegel relativ zueinander einen entriegelten bzw. verriegelten Zustand einnehmen,
- Fig. 4a und 4b: Explosionsdarstellungen des Klobenschlosses, wobei der Schieberiegel einen entriegelten bzw. einen verriegelten Zustand einnimmt,
- Fig. 5a bis 5c: das Klobenschloß gemäß Fig. 1 in einer Draufsicht, in einem Seitenquerschnitt entlang der Ebene Vb-Vb bzw. in einem Seitenquerschnitt entlang der Ebene Vc-Vc,
- Fig. 6a und 6b: den Schloßkörper mit darin eingesetztem, jedoch nicht verriegeltem Kloben in einem Seitenquerschnitt bzw. in einem weiteren Seitenquerschnitt entlang der Ebene VIb-VIb,
- Fig. 7a und 7b: das Klobenschloß gemäß Fig. 6a bzw. 6b in verriegeltem Zustand,
- Fig. 8: eine Perspektivansicht des Schieberiegels von schräg unten,
- Fig. 9: eine Perspektivansicht der Mitnehmerscheibe von schräg oben/vorne, und
- Fig. 10a und 10b: eine Seitenansicht der Mitnehmerscheibe und des daran angeordneten Schieberiegels in einem entriegelten bzw. in einem verriegelten Zustand.

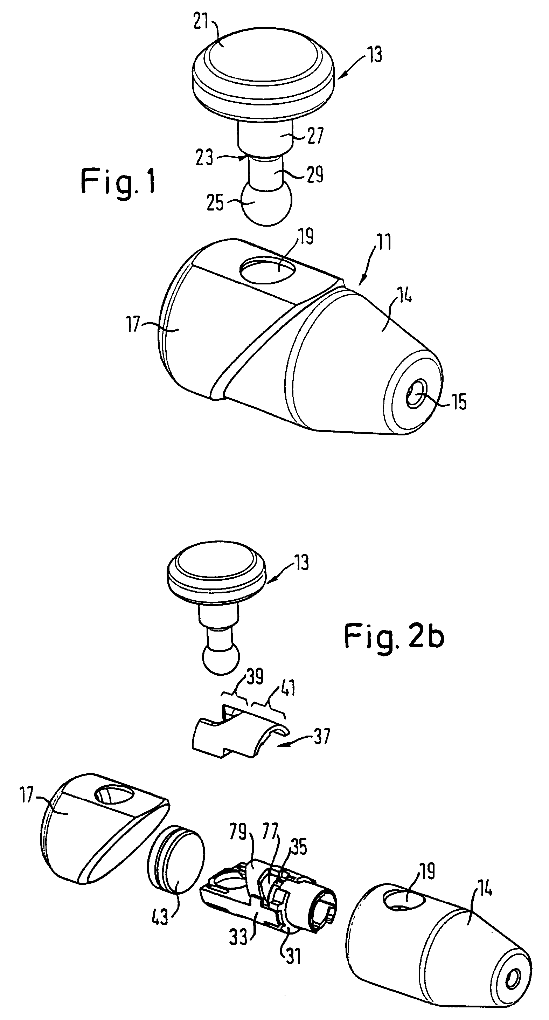

Fig. 1 zeigt ein Klobenschloß mit einem Schloßkörper 11 und einem hiervon gelösten Kloben 13. Der Schloßkörper 11 besitzt ein Schloßkörpergehäuse 14 aus Metall, das an der Spitze eines kegelstumpfförmigen Abschnitts eine Schlüsselöffnung 15 besitzt und an einem hieran anschließenden zylindrischen Abschnitt teilweise von einer Schutzkappe 17 aus Kunststoff umgeben ist. An der Mantelfläche des zylindrischen Abschnitts des Schloßkörpergehäuses 14 besitzen dieses und die Schutzkappe 17 eine Einführöffnung 19.

Der Kloben 13 weist eine runde Sperrscheibe 21 und einen daran anschließenden zylindrischen Klobenhals 23 auf, der an einem im wesentlichen kugelförmigen Verriegelungsfortsatz 25 mündet. Der Klobenhals 23 besitzt seitens der Sperrscheibe 21 einen Umgreifungsabschnitt 27 und seitens des Verriegelungsfortsatzes 25 einen relativ zu dem Umgreifungsabschnitt 27 verjüngten Verriegelungsabschnitt 29. Der Kloben 13 ist einstückig aus Metall gefertigt.

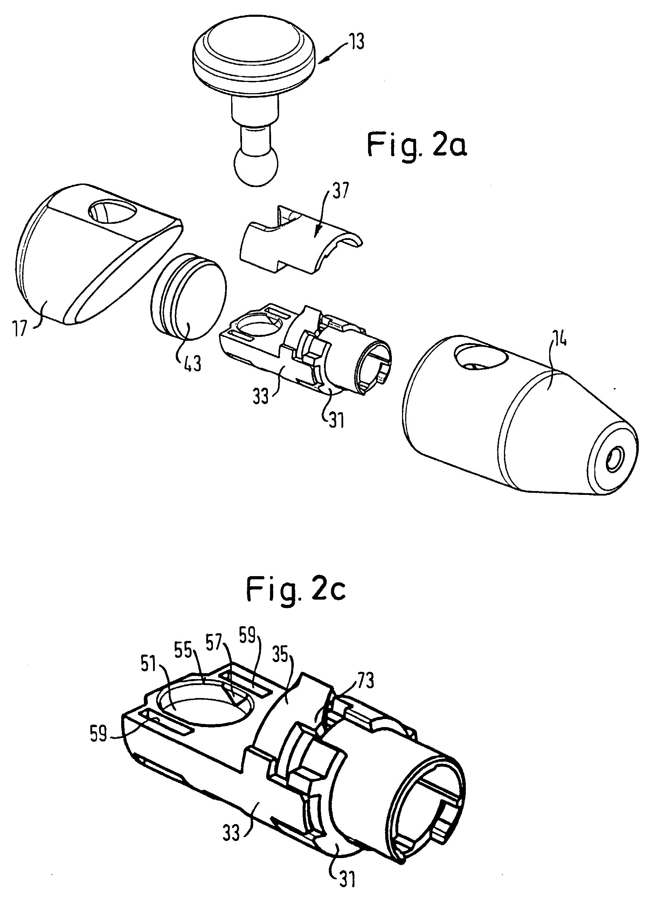

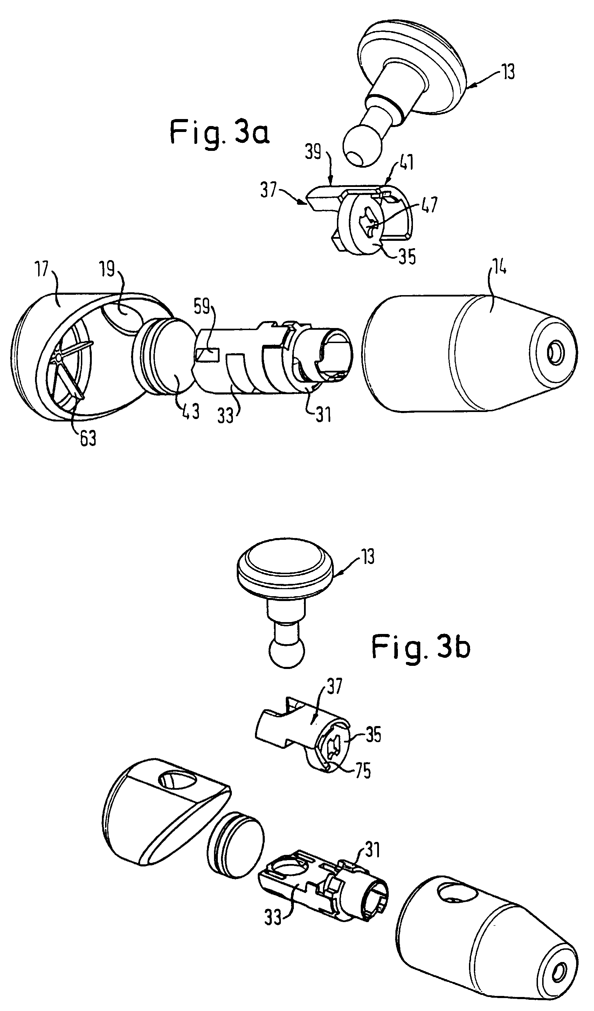

Fig. 2a und 2b, 3a und 3b sowie 4a und 4b zeigen Explosionsdarstellungen von Teilen des Klobenschlosses gemäß Fig. 1. Innerhalb des Schloßkörpergehäuses 14 sind ein im wesentlichen hohlzylindrisches Zylindergehäuse 31 aus Metall und ein hieran aufgestecktes Innengehäuse 33 aus Kunststoff vorgesehen, das im wesentlichen die Form eines Zylindersegments besitzt. Zwischen Zylindergehäuse 31 und Innengehäuse 33 ist eine Mitnehmerscheibe 35 aus Metall vorgesehen.

Außerdem enthält das Schloßkörpergehäuse 14 einen Schieberiegel 37 aus Metall. Dieser besitzt einen Verriegelungsabschnitt 39, der zum Anliegen und Verschieben entlang des Innengehäuses 33 vorgesehen ist und der im wesentlichen zylindersegmentförmig mit einer Längsaussparung ausgebildet ist, so daß der Verriegelungsabschnitt 39 in Draufsicht U-förmig erscheint. An die geschlossene Seite der U-Form des Verriegelungsabschnitts 39 schließt sich ein Umlenkungsabschnitt 41 an, der im wesentlichen die Form eines Hohlzylindersegments besitzt und zum Anliegen an der Mitnehmerscheibe 35 vorgesehen ist.

Ferner sind innerhalb des Schloßkörpergehäuses 14 ein Gehäusedeckel 43 sowie - in den Fig. 2a bis 4b nicht gezeigt - ein innerhalb des Zylindergehäuses 31 angeordneter Schließzylinder, eine zwischen dem Schließzylinder und der Schlüsselöffnung 15 des Schloßkörpergehäuses 14 angeordnete Bohrschutzscheibe und eine Rastfeder vorgesehen.

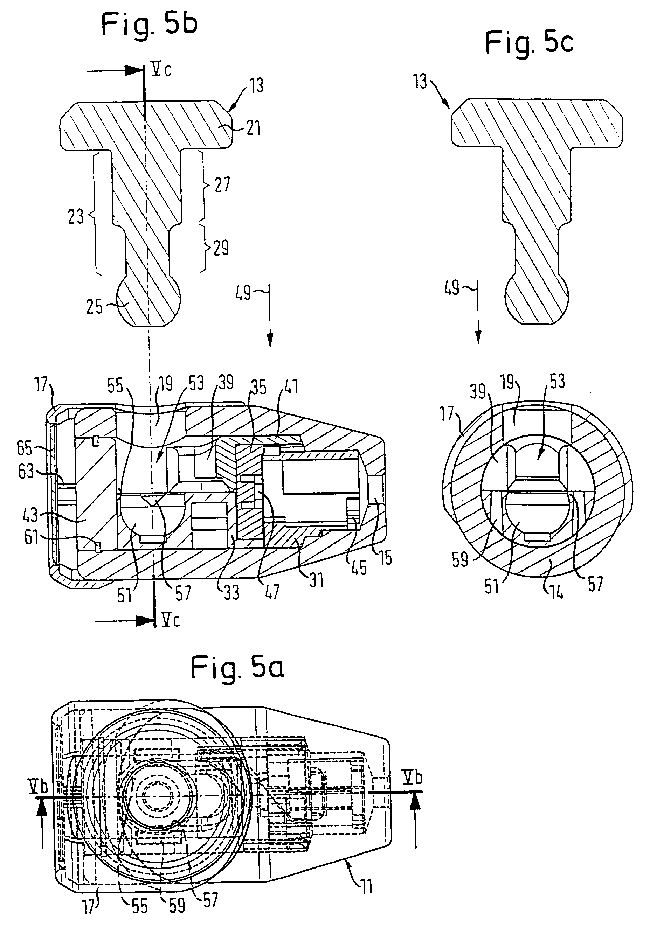

Fig. 5b und 5c, 6a und 6b sowie 7a und 7b zeigen den Aufbau des Klobenschlosses bei gelöstem Kloben 13, bei eingesetztem Kloben 13 bzw. bei verriegeltem Kloben 13. Das Zylindergehäuse 31 bzw. der darin eingesetzte, in den Figuren nicht gezeigte Schließzylinder werden von der in Fig. 5b mit dem Bezugszeichen 45 gekennzeichneten Rastfeder gehalten.

Die Mitnehmerscheibe 35 ist zwischen dem Zylindergehäuse 31, dem Innengehäuse 33 und dem Schieberiegel 37 dergestalt gelagert, daß sie um die Längsachse Schloßkörpers 11 drehbewegt werden kann. Sie besitzt eine zentrale Kopplungsaussparung 47, mit welcher der Schließzylinder zur Übertragung einer Drehbewegung in Eingriff steht.

In Verlängerung der Einführöffnung 19 des Schloßkörpergehäuses 14 hinsichtlich einer senkrecht zur Längsachse des Schloßkörpers 11 verlaufenden Einführrichtung 49 besitzt das Innengehäuse 33 eine im wesentlichen halbkugelförmige Aufnahmevertiefung 51, die gemeinsam mit dem zwischen der Einführöffnung 19 und der Aufnahmevertiefung 51 liegenden Innenraum des Schloßkörpergehäuses 14 einen Aufnahmebereich 53 bildet (Fig. 5b).

Die Aufnahmevertiefung 51 mündet bezüglich der Darstellung Fig. 5b an ihrer Oberseite an einer Haltekante 55, die innerhalb einer Ebene senkrecht zu der Einführrichtung 49 verläuft. Diese besitzt abweichend von einer kreisrunden Form zwei an dem Innengehäuse 33 angeformte, einander gegenüberstehende Rastnocken 57, die in die Aufnahmevertiefung 51 hineinragen (Fig. 5c). Hinter jedem der beiden Rastnocken 57 ist in dem Innengehäuse 33 ein Rückfederschlitz 59 vorgesehen (Fig. 2c).

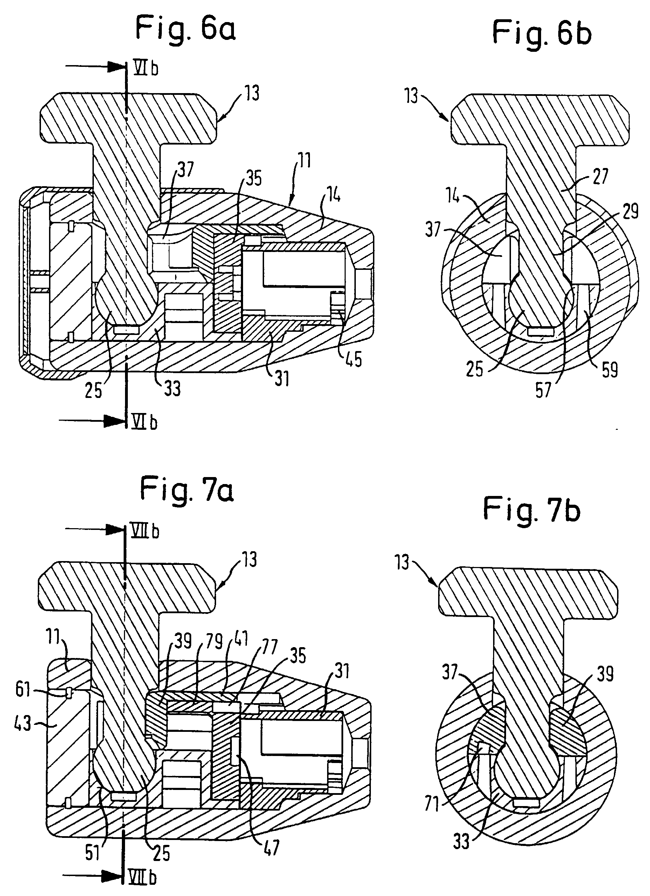

Der an das Innengehäuse 33 angrenzende Gehäusedeckel 43 ist mittels eines Sicherungsrings 61 an einer Innenumfangsfläche des Schloßkörpergehäuses 14 gesichert. Hieran angrenzend besitzt die Schutzkappe 17 einen stabilisierenden Flügelstern 63 sowie einen Schutzkappendeckel 65. Die Schutzkappe 17, der Flügelstern 63 und der Schutzkappendeckel 65 sind in den Fig. 7a und 7b nicht gezeigt.

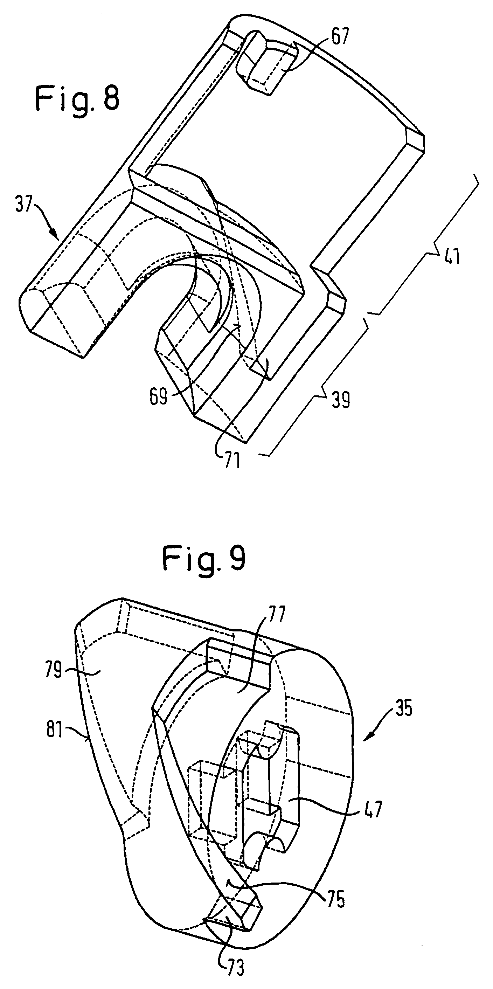

Fig. 8 zeigt den Schieberiegel 37 von schräg unten, wobei nicht sichtbare Kanten gestrichelt dargestellt sind. Einige Kanten des U-förmigen Verriegelungsabschnitts 39 des Schieberiegels 37 sind angefast, um ein Einführen des Klobens 13 in den Aufnahmebereich 53 des Schloßkörpers 11 zu ermöglichen (vgl. Fig. 5b und 5c) bzw. um ein formschlüssiges Umgreifen des Verriegelungsabschnittes 29 des Klobenhalses 23 sowie des Verriegelungsfortsatzes 25 des Klobens 13 zu gewährleisten (vgl. Fig. 7a und 7b).

An der Innenumfangsfläche des Umlenkungsabschnitts 41 des Schieberiegels 37 ist ein Führungsnocken 67 angeformt. Zwischen dem Verriegelungsabschnitt 39 und dem Umlenkungsabschnitt 41 erstreckt sich eine gekrümmt verlaufende Stufenkante 69, die an der in Fig. 8 gezeigten Unterseite des Schieberiegels 37 an einem Eingriffsschlitz 71 mündet.

Fig. 9 zeigt perspektivisch die dem Schießzylinder zugewandte Seite der Mitnehmerscheibe 35. An deren Außenumfang ist in axialer Verlängerung in Richtung des Schließzylinders eine Entriegelungszunge 73 angeformt, welche die Form einer gekrümmten Dreiecksfläche besitzt und eine gekrümmte Entriegelungsstirnfläche 75 aufweist, die sich bis zu einer Eingriffsvertiefung 77 an der Mantelfläche der Mitnehmerscheibe 35 erstreckt (vgl. auch Fig. 2b, 3b und 10b).

In axialer Verlängerung des Außenumfangs der Mitnehmerscheibe 35 in Richtung des Schieberiegels 37 besitzt die Mitnehmerscheibe 35 eine Verriegelungszunge 79, welche die Form einer gekrümmten Trapezfläche besitzt und welche eine gekrümmt bis an den Rand der Mantelfläche der Mitnehmerscheibe 35 verlaufende Verriegelungsstirnfläche 81 aufweist (vgl. auch Fig. 2b, 7a und 10b).

Das in den Fig. gezeigte Klobenschloß dient zum Absperren eines Gegenstandes durch Einführen des Klobens 13 in eine Durchlaßöffnung des Gegenstandes und durch anschließendes Verriegeln des Klobens 13 an dem Schloßkörper 11. Dadurch ist der Umgreifungsabschnitt 27 des Klobenhalses 23 radial von der Durchlaßöffnung und axial von der Sperrscheibe 21 bzw. von dem Schloßkörper 11 gefangen. Erfindungsgemäß wird bei dem Verriegeln eine Drehbetätigung des Schließzylinders bzw. der hiermit verbundenen Mitnehmerscheibe 35 in eine axiale Verriegelungs- bzw. Entriegelungsbewegung des Schieberiegels 37 umgewandelt. Diese Umwandlung wird nachfolgend näher erläutert.

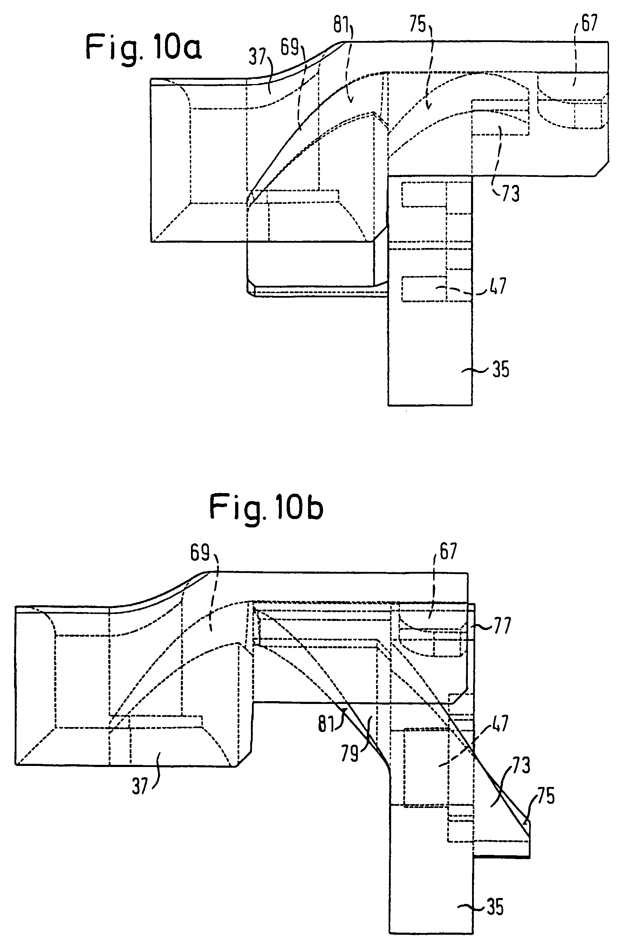

Im entriegelten Zustand des Klobenschlosses ist der Schieberiegel 37 aus dem Aufnahmebereich 53 des Schloßkörpers 11 zurückgezogen, um ein Einführen des Klobens 13 durch die Einführöffnung 19 in den Schloßkörper 11 oder eine Entnahme des Klobens 13 aus dem Schloßkörper 11 zu ermöglichen (vgl. Fig. 5a bis 5c). Dieser entriegelte Zustand des Klobenschlosses entspricht einer Stellung der Mitnehmerscheibe 35, in welcher die Verriegelungszunge 79 der Mitnehmerscheibe 35 den Eingriffsschlitz 71 des Schieberiegels 37 durchdringt und in welcher die Verriegelungsstirnfläche 81 der Stufenkante 69 gegenübersteht. Außerdem befindet sich der Führungsnocken 67 des Schieberiegels 37 an der Spitze der Entriegelungszunge 73 der Mitnehmerscheibe 35. Diese entriegelte Stellung der Mitnehmerscheibe 35 ist insbesondere aus Fig. 10a sowie aus den Fig. 2a, 2c, 3a, 4a, 5b und 6a ersichtlich.

Um ausgehend von diesem entriegelten Zustand den gemäß Fig. 6a und 6b in den Schloßkörper 11 eingeführten Kloben 13 zu verriegeln, wird mittels eines passenden Schlüssels der Schließzylinder drehbetätigt und somit die Mitnehmerscheibe 35 bezüglich der Ansicht gemäß Fig. 9 um 90° entgegen dem Uhrzeigersinn gedreht. Dadurch gelangt die Verriegelungsstirnfläche 81 der Verriegelungszunge 79 in flächigem Kontakt mit der Stufenkante 69, wodurch bei andauernder Drehbewegung der Mitnehmerscheibe 35 der Schieberiegel 37 zu einer axialen Bewegung weg von der Mitnehmerscheibe 35 gezwungen wird (vgl. 10a).

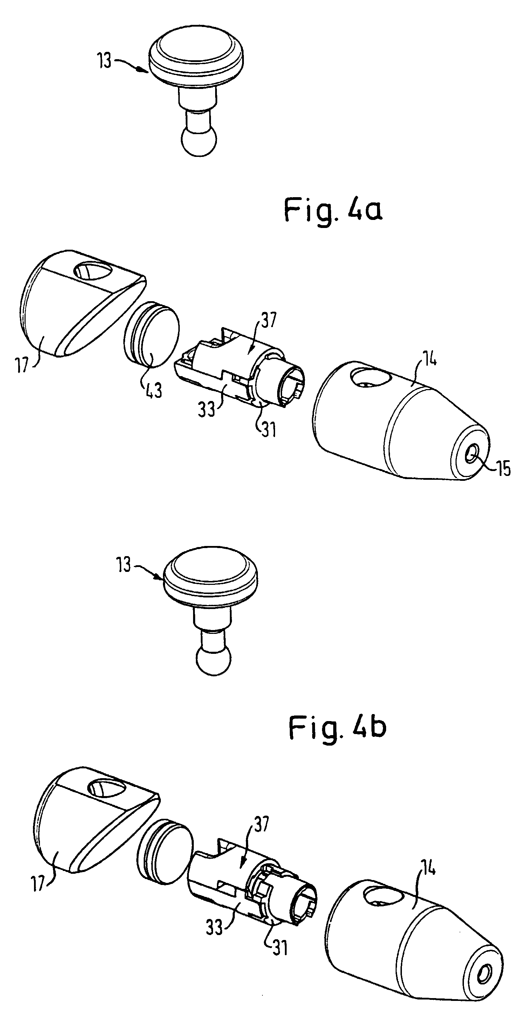

Die axiale Bewegung des Schieberiegels 37 ist also zum einen auf das Entlanggleiten der gekrümmten Verriegelungstirnfläche 81 entlang der entsprechend gekrümmten Stufenkante 69, und zum anderen darauf zurückzuführen, daß der Schieberiegel 37 mit seiner Unterseite an der Oberseite des Innengehäuses 33 bzw. des Zylindergehäuses 31 anliegt (vgl. Fig. 4a und 4b) und mit seiner Oberseite an der Innenumfangsfläche des Schloßkörpergehäuses 14 anliegt (vgl. Fig. 6a und 6b sowie Fig. 7a und 7b). Der Schieberiegel 37 kann also nicht seitlich ausweichen, um der Drehbewegung der Mitnehmerscheibe 35 zu folgen.

Stattdessen führt der Schieberiegel 37 die erläuterte axiale Bewegung durch, aufgrund derer er schließlich den verjüngten Verriegelungsabschnitt 29 des Klobenhalses 23 von drei Seiten aus umgreift. Nach Abschluß dieser Verriegelungsbewegung hat die Verriegelungszunge 79 der Mitnehmerscheibe 35 den Eingriffsschlitz 71 des Schieberiegels 37 (Fig. 8) verlassen, und der Führungsnocken 67 ist in der Eingriffsvertiefung 77 an der Mantelfläche der Mitnehmerscheibe 35 zu liegen gekommen. Die in dem derartig verriegelten Zustand des Klobenschlosses erreichte Stellung der Mitnehmerscheibe 35 ist insbesondere aus Fig. 10b sowie aus den Fig. 2b, 3b, 4b und 7a ersichtlich.

Um nun ausgehend von diesem verriegelten Zustand des Klobenschlosses zur erneuten Freigabe des Klobens 13 den Schieberiegel 37 wieder zurückzuziehen, wird die Mitnehmerscheibe 35 - mittels entsprechender Drehbetätigung des Zylinderschlosses durch den passenden Schlüssel - gemäß der Ansicht nach Fig. 9 im Uhrzeigersinn gedreht. Dadurch legt sich die Entriegelungsstirnfläche 75 der Entriegelungszunge 73 (Fig. 10b) an den Führungsnocken 67 des Schieberiegels 37 an und führt diesen bei andauernder Drehbewegung entlang der gesamten Länge der Entriegelungsstirnfläche 75. Dadurch wird der Schieberiegel 37 in axialer Richtung von dem Verriegelungsabschnitt 29 des Klobenhalses 23 weggezogen, und die Verriegelungszunge 79 dringt allmählich in den Eingriffsschlitz 71 des Schieberiegels 37 ein. Durch Abschluß einer 90°-Drehung der Mitnehmerscheibe 35 wird auf diese Weise wieder der Entriegelungszustand des Klobenschlosses erreicht.

Da der Schieberiegel 37 zum Verriegeln und Entriegeln in axialer Richtung bewegt wird, ist lediglich ein seitlicher Zugang des Schieberiegels 37 zu dem Aufnahmebereich 53 erforderlich, so daß die Umgebung des Aufnahmebereichs 53 an allen anderen Seiten ohne Rücksicht auf den Verriegelungsmechnismus in geringer Bautiefe ausgeführt werden kann. Insbesondere besteht bezüglich der Darstellung gemäß Fig. 5b und 5c unterhalb der Aufnahmevertiefung 51 kein zusätzlicher Platzbedarf für den Verriegelungsmechnismus, wie dies bei einer rotierenden Verriegelungshülse gemäß dem Stand der Technik der Fall ist.

Im übrigen kann - abweichend von dem in den Figuren dargestellten Ausführungsbeispiel - eine weitere Reduzierung der Bautiefe dadurch erreicht werden, daß der Schieberiegel 37 flach oder allenfalls in der Form eines Hohlzylindersegments gewölbt mit einer geringeren Tiefe in Einführrichtung 49 als der Verriegelungsabschnitt 39 des gezeigten Schieberiegels 37 ausgeführt wird, und daß der Kloben 13 entsprechend verkürzt wird.

Bei dem in den Figuren dargestellten Ausführungsbeispiel wird der durch die lediglich axiale Bewegung des Schieberiegels 37 erzielte Platzgewinn dazu ausgenutzt, um eine besonders vorteilhafte Rasthalterung des in den Schloßkörper 11 eingeführten, jedoch nicht verriegelten Klobens 13 zu ermöglichen. Diese Rasthalterung wird im folgenden näher erläutert:

Die Haltekante 55, welche die Aufnahmevertiefung 51 des Innengehäuses 33 mit geschlossenem Umfang begrenzt, besitzt in entspanntem Zustand keinen kreisrunden Verlauf, sondern weist stattdessen die zwei einander gegenüberstehenden Rastnocken 57 (vgl. Fig. 2c sowie Fig. 5b und 5c). Der Innenumfang der Haltekante entspricht dem maximalen Außendurchmesser des Verriegelungsfortsatzes 25 innerhalb einer Ebene, die senkrecht zu der Einführrichtung 49 steht, oder überschreitet diesen Außendurchmesser lediglich geringfügig.

Beim Einführen des Verriegelungsfortsatzes 25 in die Aufnahmevertiefung 51 wird die Haltekante 55 aufgrund einer Ausbildung des Innengehäuses 33 aus elastischem Kunststoff sowie aufgrund der Vorsehung der Rückfederschlitze 59 kurzzeitig zu einem dem Außendurchmesser des Verriegelungsfortsatzes 25 entsprechenden Verlauf umgeformt. Nach vollständigem Einführen des Verriegelungsfortsatzes 25 in die Aufnahmevertiefung 51 federt die Haltekante 55 in ihre normale, nicht kreisrunde Form zurück, so daß der Verriegelungsfortsatz 25 zumindest von den beiden Rastnocken 57 hintergriffen wird (vgl. Fig. 6b). Dadurch wird der in den Schloßkörper 11 eingesetzte Kloben 13 gehalten, und zwar auch dann, wenn der Kloben 13 nicht verriegelt ist.

Durch Überwindung der von der Haltekante 55 auf den Verriegelungsfortsatz 25 ausgeübten Haltekraft kann der Benutzer den entriegelten Kloben 13 dem Schloßkörper 11 sicher und kontrolliert entnehmen. Umgekehrt kann der Benutzer den Verriegelungsfortsatz 25 in die Aufnahmevertiefung 51 einstecken, bevor er das Klobenschloß anschließend verriegelt.

Zu der aus Fig. 2c ersichtlichen Ausgestaltung der Haltekante 55 ist anzumerken, daß deren Verlauf nicht unbedingt geschlossen ausgeführt sein muß, sondern auch unterbrochen sein kann, so daß beispielsweise die beiden Rastnocken 57 als im wesentliche freistehende Rastarme ausgestaltet sein können. Alternativ hierzu ist es auch möglich, die Haltekante 55 ohne Rastnocken, jedoch mit einem geschlossenen ovalen Verlauf zu versehen.

### Bezugszeichenliste

- 11: Schloßkörper
- 13: Kloben
- 14: Schloßkörpergehäuse
- 15: Schlüsselöffnung
- 17: Schutzkappe
- 19: Einführöffnung
- 21: Sperrscheibe
- 23: Klobenhals
- 25: Verriegelungsfortsatz
- 27: Umgreifungsabschnitt
- 29: Verriegelungsabschnitt
- 31: Zylindergehäuse
- 33: Innengehäuse
- 35: Mitnehmerscheibe
- 37: Schieberiegel
- 39: Verriegelungsabschnitt
- 41: Umlenkungsabschnitt
- 43: Gehäusedeckel
- 45: Rastfeder
- 47: Kopplungsaussparung
- 49: Einführrichtung
- 51: Aufnahmevertiefung
- 53: Aufnahmebereich
- 55: Haltekante
- 57: Rastnocken
- 59: Rückfederschlitz
- 61: Sicherungsring
- 63: Flügelstern
- 65: Schutzkappendeckel
- 67: Führungsnocken
- 69: Stufenkante
- 71: Eingriffsschlitz
- 73: Entriegelungszunge
- 75: Entriegelungsstirnfläche
- 77: Eingriffsvertiefung
- 79: Verriegelungszunge
- 81: Verriegelungsstirnfläche

## Patentansprüche

1. Klobenschloß, insbesondere Bremsscheibenschloß für Motorräder, mit einem Schloßkörper (11) und einem hieran verriegelbaren Kloben (13),
wobei der Kloben (13) einen Sperranker (21), einen Verriegelungsfortsatz (25) sowie einen dazwischen angeordneten Klobenhals (23) aufweist, und
wobei der Schloßkörper (11) einen Aufnahmebereich (53) zur Aufnahme des Verriegelungsfortsatzes (25) des Klobens (13), einen Schließzylinder und einen durch eine Drehbetätigung des Schließzylinders bewegbaren Riegel (37) zum Verriegeln oder Entriegeln des in den Aufnahmebereich (53) eingeführten Verriegelungsfortsatzes (25) aufweist;
**dadurch gekennzeichnet,**
daß der Schloßkörper (11) ferner wenigstens ein Umwandlungselement (67, 69, 75, 81) aufweist, durch das eine Drehbetätigung des Schließzylinders in eine axiale Verriegelungs- oder Entriegelungsbewegung des Riegels (37) umwandelbar ist.

2. Klobenschloß nach Anspruch 1,
**dadurch gekennzeichnet,**
daß als ein Umwandlungselement wenigstens eine Schrägführung (75 bzw. 81) vorgesehen ist, und
daß als ein weiteres, mit der Schrägführung (75 bzw. 81) zusammenwirkendes Umwandlungselement wenigstens ein Nocken (67) und / oder eine weitere Schrägführung (69) vorgesehen ist.

3. Klobenschloß nach Anspruch 2,
**dadurch gekennzeichnet,**
daß die Schrägführung und / oder die weitere Schrägführung durch eine gekrümmte Stufenkante (69), Stirnseite (75, 81) oder Nut gebildet ist.

4. Klobenschloß nach Anspruch 3,
**dadurch gekennzeichnet,**
daß für die Verriegelungsbewegung des Riegels (37)ein zusammenwirkendes Paar aus Schrägführung (81) und Nocken bzw. weiterer Schrägführung (69) und für die Entriegelungsbewegung des Riegels ein weiteres zusammenwirkendes Paar aus Schrägführung (75) und Nocken (67) bzw. weiterer Schrägführung vorgesehen ist.

5. Klobenschloß nach einem der vorhergehenden Ansprüche,
**dadurch gekennzeichnet,**
daß das Umwandlungselement (67, 69) an dem Riegel (37) und ein hiermit zusammenwirkendes weiteres Umwandlungselement (75 bzw. 81) an dem Schließzylinder oder an einem mit dem Schließzylinder verbundenen Mitnehmerelement (35) vorgesehen ist.

6. Klobenschloß nach einem der vorhergehenden Ansprüche,
**dadurch gekennzeichnet,**
daß der Schloßkörper (11) ein drehbewegliches Mitnehmerelement, insbesondere eine Mitnehmerscheibe (35) aufweist, das mit dem Schließzylinder drehwirksam verbunden ist.

7. Klobenschloß nach einem der vorhergehenden Ansprüche,
**dadurch gekennzeichnet,**
daß der Schloßkörper (11) in oder an dem Aufnahmebereich (53) wenigstens ein Halteelement (33, 55) zum Halten des in den Aufnahmebereich (53) eingeführten Verriegelungsfortsatzes (25) aufweist.

8. Klobenschloß nach Anspruch 7,
**dadurch gekennzeichnet,**
daß die Haltekraft, die von dem Halteelement (33, 55) auf den im Aufnahmebereich (53) gehaltenen Verriegelungsfortsatz (25) ausgeübt wird, größer ist als das Gewicht des Klobens (13).

9. Klobenschloß nach einem der Ansprüche 7 oder 8,
**dadurch gekennzeichnet,**
daß das Halteelement (33, 55) wenigstens ein Rastelement (57) aufweist, an dem der Verriegelungsfortsatz (25) verrastbar ist.

10. Klobenschloß nach einem der Ansprüche 7 bis 9,
**dadurch gekennzeichnet,**
daß das Halteelement (33) eine rückfedernde Haltekante (55) aufweist, die in entspanntem Zustand vorzugsweise eine nicht kreisrunde Form besitzt.

11. Klobenschloß nach Anspruch 10,
**dadurch gekennzeichnet,**
daß der Innenumfang der Haltekante (55) dem Außendurchmesser des Verriegelungsfortsatzes (25) entspricht, insbesondere dem maximalen Außendurchmesser des Verriegelungsfortsatzes (25) innerhalb einer Ebene, die senkrecht zu einer Richtung (49) des Einführens des Verriegelungsfortsatzes (25) in den Aufnahmebereich (53) verläuft.

12. Klobenschloß nach einem der vorhergehenden Ansprüche,
**dadurch gekennzeichnet,**
daß der Riegel (37) einen U-förmigen Verriegelungsabschnitt (39) zum mehrseitigen Umgreifen des Klobens (13) an dem Klobenhals (23) und / oder wenigstens eine Führungsfläche zur Stabilisierung der axialen Verriegelungs- bzw. Entriegelungsbewegung aufweist.
